(19) **Europäisches Patentamt**
**European Patent Office**
**Office européen des brevets**

(11) **EP 2 923 862 B1**

(12) **EUROPÄISCHE PATENTSCHRIFT**

(45) Veröffentlichungstag und Bekanntmachung des Hinweises auf die Patenterteilung:
**24.04.2019 Patentblatt 2019/17**

(51) Int Cl.:
***B60D 1/24*** *(2006.01)*      ***B60D 1/62*** *(2006.01)*
***B62D 13/06*** *(2006.01)*

(21) Anmeldenummer: **15000406.7**

(22) Anmeldetag: **11.02.2015**

(54) **Verfahren zum Betrieb eines Fahrerassistenzsystems in einem Kraftfahrzeug und Kraftfahrzeug**

Method for operating a driver assistance system in a motor vehicle and motor vehicle

Procédé de fonctionnement d'un système d'assistance au conducteur dans un véhicule automobile et véhicule automobile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2014 DE 102014003779**

(43) Veröffentlichungstag der Anmeldung:
**30.09.2015 Patentblatt 2015/40**

(73) Patentinhaber: **AUDI AG**
**85045 Ingolstadt (DE)**

(72) Erfinder:
• **Vogt, Hermann**
**DE - 85072 Eichstätt (DE)**
• **Sabelström, Erik**
**DE - 80992 München (DE)**

(74) Vertreter: **Thielmann, Frank**
**AUDI AG**
**Patentabteilung**
**85045 Ingolstadt (DE)**

(56) Entgegenhaltungen:
**DE-A1-102008 013 457    DE-A1-102010 050 474**
**DE-A1-102012 207 647    US-A1- 2004 130 441**

EP 2 923 862 B1

**Beschreibung**

Die Erfindung betrifft ein Verfahren zum Betrieb eines Fahrerassistenzsystems in einem Kraftfahrzeug, wobei das Kraftfahrzeug eine Erfassungseinrichtung zur Erfassung von Knickwinkeländerungen zwischen einem Anhänger des Kraftfahrzeugs und dem Kraftfahrzeug aufweist. DE102008013457 A1 offenbart ein gattungsgemäßes Verfahren.

Rückwärtsfahrten mit einem Anhänger, insbesondere einem nichtgelenken Anhänger, sind insbesondere für Fahrer, die nicht regelmäßig einen Anhänger nutzen, sehr anspruchsvoll. Daher sind zahlreiche Verfahren bekannt, um einen Fahrer beim Rangieren mit einem Anhänger zu unterstützen. Einige dieser Verfahren stellen dem Fahrer nur zusätzliche Informationen zur Verfügung, in anderen Verfahren wird durch ein Fahrerassistenzsystem aktiv in den Fahrbetrieb eingegriffen, um den Fahrer zu unterstützen.

Besonders anspruchsvoll sind dabei Fahrten mit einem Anhänger, an den sich der Fahrer noch nicht gewöhnt hat. Insbesondere bei unbekannten Anhängern ist jedoch auch die Nutzung von Fahrerassistenzsystemen, die den Fahrer mit Informationen oder Fahreingriffen unterstützen, problematisch, da bei einer Nutzung eines unbekannten Anhängers wesentliche Informationen für das Fahrerassistenzsystem fehlen, insbesondere eine Deichsellänge des Anhängers, also die Länge zwischen der Anhängerkupplung und der Achse bzw. dem Drehpunkt des Anhängers. Die Deichsellänge des Anhängers ist jedoch ein Faktor, der die Dynamik des Anhängers wesentlich beeinflusst und insbesondere die Änderungsgeschwindigkeit des Knickwinkels zwischen Anhänger und Kraftfahrzeug bei anderen gegebenen Parametern vorgibt. Es ist daher bekannt, eine solche Deichsellänge manuell in ein Fahrerassistenzsystem einzugeben. Als Alternative dazu schlägt die Druckschrift DE 10 2010 050 474 ein Verfahren vor, bei dem bei Kenntnis eines absoluten Knickwinkels zwischen Kraftfahrzeug und Anhänger eine Deichsellänge geschätzt werden kann.

Dabei ist jedoch nachteilig, dass bei typischen Erfassungseinrichtungen für den Knickwinkel in einem Kraftfahrzeug der absolute Knickwinkel nicht direkt nach dem Ankoppeln des Anhängers zur Verfügung steht. Häufig werden Sensoren genutzt, die nur eine relative Änderung des Knickwinkels erfassen. Ein absoluter Knickwinkel kann erst nach einer Anlernphase, die eine Vorwärtsfahrt mit einem Lenkwinkel von ca. 0° für eine gewisse Strecke umfasst, ausgegeben werden.

Der vorliegenden Anmeldung liegt damit die Aufgabe zugrunde, ein demgegenüber verbessertes Verfahren zur Fahrerunterstützung anzugeben, das insbesondere eine Anlernphase bei unbekanntem Anhänger verkürzen kann.

Die Aufgabe wird erfindungsgemäß durch ein Verfahren der eingangs genannten Art gelöst, das die folgenden Schritte umfasst:

a) Beginn der Erfassung der Knickwinkeländerungen,

b) Erfassen einer ersten Lenkwinkelinformation, die einen Lenkwinkel des Kraftfahrzeugs beschreibt, durch eine Lenkwinkelerfassungseinrichtung zu einem ersten Erfassungszeitpunkt, an dem eine eine Knickwinkeländerung auswertende Stabilitätsbedingung erfüllt ist,

c) Erfassen einer zweiten Lenkwinkelinformation zu einem zweiten Erfassungszeitpunkt, an dem die Stabilitätsbedingung erfüllt ist,

d) Bestimmen eines relativen Knickwinkelwerts als Summe der Knickwinkeländerungen zwischen dem ersten und dem zweiten Erfassungszeitpunkt,

e) Berechnen eines Deichsellängenwerts für den Anhänger und/oder eines absoluten Knickwinkelwerts zum ersten und/oder zweiten Erfassungszeitpunkt in Abhängigkeit von der ersten Lenkwinkelinformation, der zweiten Lenkwinkelinformation, dem relativen Knickwinkelwert und vorgegebenen Fahrzeuggeometriedaten, und

f) Steuerung eines Fahreingriffs und/oder Ausgabe einer Information in Abhängigkeit des berechneten Deichsellängenwerts und/oder des berechneten absoluten Knickwinkelwerts.

Erfindungsgemäß wird damit vorgeschlagen, das Vorliegen einer stabilen Fahrt, bei der sich ein Knickwinkel im Wesentlichen nicht ändert, zu erkennen und während wenigstens zweier solcher stabiler Zustände den jeweiligen Lenkwinkel sowie den Erfassungszeitpunkt zu erfassen. Da während des Verfahrens Knickwinkeländerungen erfasst werden, ist zwischen den jeweiligen Erfassungszeitpunkten ein relativer Knickwinkel zwischen den wenigstens zwei stabilen Zuständen durch die Summe der Knickwinkeländerungen zwischen den Erfassungszeitpunkten berechenbar. Wie im Folgenden noch genauer erläutert, kann daraus der absolute Knickwinkel und/oder der Deichsellängenwert für den Anhänger berechnet werden. Der berechnete Deichsellängenwert, der die Länge zwischen dem Ankoppelpünkt des Anhängers und dem Drehpunkt des Anhängers, also bei einem einachsigen Anhänger der Achse, angibt, bzw. der absolute Knickwinkel werden anschließend zur Steuerung eines Fahreingriffs und/oder zur Ausgabe von Informationen genutzt. Dabei kann beispielsweise eine grafische Ausgabe des absoluten Knickwinkels an einem Display oder ein automatischer Fahreingriff zur Anpassung eines Knickwinkels durch ein Fahrerassistenzsystem vorgesehen sein.

Durch Prüfung der Stabilitätsbedingung soll das Vorliegen eines stabilen Knickwinkels, der sich zeitlich nicht oder nur unwesentlich ändert, ermittelt werden. Dies entspricht einem Fahren des Kraftfahrzeugs und des Anhängers auf einer gemeinsamen Kreisbahn. Als Lenkwinkelinformation wird insbesondere der Lenkwinkel an wenigstens einem Rad des Kraftfahrzeugs, insbesondere an der Vorderachse, erfasst. Weist das Fahrzeug eine Hinterradlenkung auf, kann zusätzlich oder alternativ auch der Lenkwinkel des Hinterrads erfasst werden. Alternativ hierzu kann als Lenkwinkelinformation auch eine lenkradseitige oder fahrerassistenzsystemseitige Vorgabe eines Lenkwinkels erfasst werden. Als weitere Alternative wäre eine Erfassung der Lenkwinkelinformation aus lenkwinkelabhängigen Daten möglich. So könnte beispielsweise eine Gierrate und eine Geschwindigkeit des Kraftfahrzeugs erfasst und aus diesen der Lenkwinkel ermittelt werden.

Die Knickwinkeländerungen können im erfindungsgemäßen Verfahren insbesondere über Impulsgeber an der Anhängerkupplung erfasst werden. Ein solcher Impulsgeber kann beispielsweise aus einem Zahnkranz bzw. einer Lochblende und einem zugeordneten Sensor bestehen. Dabei kann die Knickwinkeländerung insbesondere über einen Zähler erfasst werden. Es ist jedoch auch möglich, dass die Erfassungseinrichtung Knickwinkelgeschwindigkeiten bereitstellt, die die Änderung des Knickwinkels über einen vorgegebenen Zeitraum beschreiben.

Bei der Erfassung der zweiten Lenkwinkelinformation kann als Zusatzbedingung ausgewertet werden, ob der relative Knickwinkel zwischen dem ersten und dem zweiten Erfassungszeitpunkt größer ist als ein vorgegebener Mindestwert. Wird ein derartiger Mindestwert unterschritten, so kann die erfasste Lenkwinkelinformation verworfen und die Schritte c) und d) können wiederholt werden. Damit wird insbesondere verhindert, die Lenkwinkelinformationen bei identischen Knickwinkeln aufzunehmen.

Ergänzend oder alternativ kann bei der Erfassung der zweiten Lenkwinkelinformation als weitere Zusatzbedingung ausgewertet werden, ob der Betrag der Differenz zwischen dem durch die erste Lenkwinkelinformation beschriebenen Lenkwinkel und dem durch die zweite Lenkwinkelinformation beschriebenen Lenkwinkel größer ist als ein weiterer vorgegebener Mindestwert. Wird der weitere Mindestwert unterschritten, so kann die erfasste zweite Lenkwinkelinformation verworfen und die Schritte c) und d) können wiederholt werden. Dies ist vorteilhaft, da insbesondere bei Anhängern mit kurzer Deichsellänge selbst bei ausreichend großem relativen Knickwinkelwert nicht notwendigerweise ein ausreichender Lenkwinkelunterschied zur ausreichend genauen Berechnung des absoluten Knickwinkels bzw. des Deichsellängenwertes gegeben ist.

Der Zusammenhang zwischen einem Lenkwinkel des Kraftfahrzeugs bzw. mehreren Lenkwinkeln des Kraftfahrzeugs, dem Deichsellängenwert, dem absoluten Knickwinkelwert und der Fahrzeuggeometrie für einen stabilen Zustand, in dem sich der Anhänger und das Kraftfahrzeug auf einer gemeinsamen Kreisbahn bewegen, kann aus geometrischen Betrachtungen abgeleitet werden. Bei einer gemeinsamen Bewegung auf einer Kreisbahn verhält sich das Gesamtsystem aus Kraftfahrzeug und Anhänger wie ein starrer Körper, womit die momentane Bewegung des Kraftfahrzeugs und des Anhängers als eine Rotation von Kraftfahrzeug und Anhänger um einen gemeinsamen sogenannten Momentanpol dargestellt werden kann. Dies ist besonders einfach möglich, wenn ein Einspurmodell des Kraftfahrzeugs und des Anhängers genutzt wird, bei dem pro Achse nur ein Reifen betrachtet wird. Ergänzend kann davon ausgegangen werden, dass kein Schlupf erfolgt, d. h. sich die Reifen insbesondere nur in eine Richtung senkrecht zu ihrer Rotationsachse bewegen. Dabei trifft dieses Modell auf Rangiersituationen bei niedrigen Geschwindigkeiten gut zu. Aufgrund der genannten Einschränkungen für die Bewegung der Reifen liegt der Momentanpol für alle Reifen am Schnittpunkt der Rotationsachsen der Reifen. Dabei ist bei der folgenden Erklärung zu beachten, dass von einem einachsigen Anhänger ausgegangen wird. Bei mehrachsigen Anhängern gilt das Gesagte für eine virtuelle Achse, die den Drehpunkt des Anhängers beschreibt und beispielsweise bei zweiachsigen Anhängern in der Mitte zwischen diesen beiden Achsen liegt. Zudem wird im Folgenden von einer reinen Vorderradlenkung ausgegangen. Die gleichen geometrischen Überlegungen lassen sich jedoch auch auf ein Kraftfahrzeug übertragen, das eine Hinterradlenkung aufweist.

Aus den genannten Überlegungen lässt sich folgender Zusammenhang zwischen einem momentanen Knickwinkel y und einem Lenkwinkel δ, bei dem dieser Knickwinkel y stabil ist, herleiten:

$$\tan(\delta) = \left( \frac{l_{vh}}{\left( l_{dl} * \sin(\gamma) + \frac{l_{ak}}{\tan(\gamma)} l_{dl} * \frac{\cos(\gamma)}{\tan(\gamma)} \right)} \right),$$

wobei $l_{dl}$ die Deichsellänge des Anhängers ist, $l_{vh}$ der Abstand zwischen der Vorderachse und der Hinterachse des Kraftfahrzeugs und $l_{ak}$ die Kopplungslänge der Anhängerkupplung, also der Abstand zwischen der Hinterachse des Kraftfahrzeugs und der Anhängerkupplung.

Der Abstand zwischen Vorder- und Hinterachse des Kraftfahrzeugs und der Abstand zwischen Hinterachse und Anhängerkupplung des Kraftfahrzeugs sind dabei für ein Kraftfahrzeug fest vorgegeben und können insbesondere in einer Steuereinrichtung, die das erfindungsgemäße Verfahren durchführt, gespeichert sein. Der Lenkwinkel $\delta$ ist durch die Lenkwinkelinformation beschrieben. Damit verbleiben in der Gleichung als Unbekannte die Deichsellänge $I_{dl}$ sowie der momentane absolute Knickwinkel $\gamma$. Da also zwei Variablen unbekannt sind, kann bei einer einzigen Erfüllung der Stabilitätsbedingung noch kein absoluter Knickwinkelwert und kein Deichsellängenwert berechnet werden. Wird jedoch wie im erfindungsgemäßen Verfahren zu einem zweiten Erfassungszeitpunkt, zu dem die Stabilitätsbedingung erfüllt ist, eine zweite Lenkwinkelinformation erfasst, so kann auch für den zweiten Erfassungszeitpunkt eine entsprechende Gleichung aufgestellt werden. Dabei ändert sich zwischen den Erfassungszeitpunkten ausschließlich der absolute Knickwinkel y sowie der Lenkwinkel $\delta$.

Ohne eine Berücksichtigung des relativen Knickwinkels liegen damit zunächst zwei Gleichungen mit drei Unbekannten, nämlich der Deichsellänge, dem Knickwinkel zum ersten Erfassungszeitpunkt und dem Knickwinkel zum zweiten Erfassungszeitpunkt vor. Da der relative Knickwinkel im erfindungsgemäßen Verfahren jedoch bekannt ist, kann beispielsweise der Knickwinkel zum zweiten Erfassungszeitpunkt als die Summe des unbekannten Knickwinkels zum ersten Erfassungszeitpunkt und des relativen Knickwinkelwerts angesetzt werden, womit sich die Anzahl der Unbekannten auf zwei reduziert, nämlich den ersten absoluten Knickwinkel und die Deichsellänge.

Damit ist ein Gleichungssystem mit zwei Gleichungen und zwei Unbekannten bekannt, das durch bekannte Algorithmen gelöst werden kann, um den absoluten Knickwinkel für den ersten und/oder den zweiten Erfassungszeitpunkt sowie den Deichsellängenwert zu bestimmen. Im erfindungsgemäßen Verfahren können statt einer direkten Lösung der Gleichungssysteme durch eine Steuereinrichtung auch alternative Ansätze, wie zweidimensionale Wertetabellen, genutzt werden.

Um einen relativen Knickwinkel zwischen dem ersten Erfassungszeitpunkt und dem zweiten Erfassungszeitpunkt zu ermitteln, können die Erfassungszeitpunkte sowie ein zeitlicher Verlauf der Knickwinkeländerung gespeichert werden und die Knickwinkeländerungen zwischen dem ersten und dem zweiten Erfassungszeitpunkt summiert werden. Insbesondere bei Nutzung einer zählerbasierten Erfassung der Knickwinkeländerung, also beispielsweise bei einer Erfassung der Knickwinkeländerung mit einem Impulszähler, kann der relative Knickwinkel auch bestimmt werden, indem zum jeweiligen Erfassungszeitpunkt ein momentaner Zählerwert, der die Knickwinkeländerungen zählt, bzw. eine andere Darstellung eines relativen Knickwinkels gespeichert wird und die Zählerwerte anschließend voneinander abgezogen werden. Insbesondere kann der Zähler nach Speicherung des Zählerwertes auf 0 gesetzt werden. Damit beschreibt der Zählerwert zum zweiten Erfassungszeitpunkt direkt den relativen Knickwinkel.

Sobald im Rahmen des erfindungsgemäßen Verfahrens ein absoluter Knickwinkelwert für einen Zeitpunkt berechnet ist, können die zeitlich darauffolgenden Knickwinkelwerte stets aus den zwischenzeitlichen Knickwinkeländerungen und dem berechneten absoluten Knickwinkelwert berechnet werden. Dies kann insbesondere vorteilhaft sein, wenn Lenkwinkelinformationen zu mehreren Erfassungszeitpunkten erfasst werden sollen und, wie im Folgenden noch genauer erläutert, absolute Knickwinkelwerte zu verschiedenen Erfassungszeitpunkten miteinander verglichen werden sollen.

Dabei kann zur Auswertung der Stabilitätsbedingung die Summe der Knickwinkeländerungen während eines vorgegebenen Zeitintervalls bestimmt und mit einem vorgegebenen Stabilitätsgrenzwert verglichen werden. Das Zeitintervall kann dabei einige Sekunden, insbesondere weniger als 10 Sekunden, lang sein, jedoch auch weniger als eine Sekunde. Als Grenzwert kann beispielsweise ein Stabilitätsgrenzwert von 0,1° - 5° vorgegeben werden. Dabei können das Zeitintervall und/oder der Stabilitätsgrenzwert geschwindigkeitsabhängig vorgegeben werden. Alternativ wäre es beispielsweise möglich, wiederholt die Knickwinkelgeschwindigkeit zu bestimmen und die verschiedenen Knickwinkelgeschwindigkeitswerte statistisch, insbesondere durch Mittelwertbildung oder Medianauswahl, auszuwerten und das Auswertungsergebnis mit einem Grenzwert zu vergleichen.

Als Lenkwinkelinformation kann wenigstens ein Lenkwinkel an der Vorder- und/oder Hinterachse erfasst werden, oder es kann als Lenkwinkelinformation eine Gierrate des Kraftfahrzeugs und eine Fahrzeuggeschwindigkeit ermittelt werden. Ergänzend ist es möglich, zusätzlich die momentane Knickwinkeländerung während eines vorgegebenen Zeitintervalls und die Kraftfahrzeuggeschwindigkeit zu ermitteln. Dies ist insbesondere möglich, wenn die Knickwinkeländerung relativ hochauflösend erfasst wird und damit auch in einem als stabil erkannten Zustand Knickwinkeländerungen erfasst werden. Aus der Knickwinkeländerung und der Kraftfahrzeuggeschwindigkeit ist dabei ein Rückschluss auf die momentan auf den Anhänger wirkenden Kräfte und damit eine Korrektur bzw. Plausibilisierung des berechneten absoluten Knickwinkelwerts bzw. des errechneten Deichsellängenwertes möglich.

Es kann wenigstens eine weitere Lenkwinkelinformation zu einem weiteren Erfassungszeitpunkt, an dem die Stabilitätsbedingung erfüllt ist, erfasst werden, wonach wenigstens ein weiterer relativer Knickwinkelwert bezüglich eines anderen der Erfassungszeitpunkte bestimmt wird, wobei für mehrere Paare von Erfassungszeitpunkten jeweils ein Deichsellängenschätzwert und/oder ein Knickwinkelschätzwert berechnet wird, wonach aus den mehreren Deichsellängenschätzwerten bzw. Knickwinkelschätzwerten durch eine statistische Auswertung der Deichsellängenwert bzw. der absolute Knickwinkelwert zu wenigstens einem der Erfassungszeitpunkte bestimmt wird. Dabei können für die Paare von Erfassungszeitpunkten insbesondere zeitlich aufeinanderfolgende Erfassungszeitpunkte genutzt werden. Soll nicht ausschließlich ein Deichsellängenwert, sondern auch ein absoluter Knickwinkelwert bestimmt werden, so ist zu beachten, dass für jedes Paar von Erfassungszeitpunkten zunächst nur absolute Knickwinkelwerte für die im Paar enthaltenen Erfassungszeitpunkte bestimmt werden können. Da jedoch die relativen Knickwinkeländerungen zwischen den verschiedenen Erfassungszeitpunkten leicht berechnet werden können, kann für einen der Erfassungszeitpunkte ein absoluter Knickwinkelwert auch unter Berücksichtigung von Paaren von Erfassungszeitpunkten bestimmt werden, die den entsprechenden Erfassungszeitpunkt nicht umfassen. Hierzu können alle im Rahmen der statistischen Auswertung genutzten Knickwinkelschätzwerte in Knickwinkelschätzwerte zu einem einzigen Erfassungszeitpunkt umgerechnet werden.

Die statistische Auswertung kann insbesondere durch Mittelwertbildung, jedoch auch durch Wahl des Medians erfolgen. Alternativ wäre eine Nutzung komplexerer statistischer Verfahren, beispielsweise eines RANSAC-Algorithmus möglich.

Bei der Bestimmung des Deichsellängenwerts bzw. des absoluten Knickwinkelwerts können ergänzend auch Daten weiterer Sensoren, beispielsweise von Kameras oder Ultraschallsensoren genutzt werden, oder die Werte dieser Sensoren können zur Plausibilisierung des bestimmten absoluten Knickwinkelwerts und/oder des Deichsellängenwerts genutzt werden. Alternativ oder ergänzend können auch verschiedene Deichsellängenschätzwerte bzw. Knickwinkelschätzwerte zur gegenseitigen Plausibilisierung genutzt werden.

Insbesondere kann nach Erfassung wenigstens einer der weiteren Lenkwinkelinformationen ein vorläufiger Deichsellängenwert und/oder ein vorläufiger absoluter Knickwinkelwert bestimmt werden, wonach die Ausgabe der Information und/oder die Steuerung eines Fahreingriffs zunächst in Abhängigkeit des vorläufigen Deichsellängenwertes bzw. des vorläufigen absoluten Knickwinkelwertes erfolgt. Dabei kann ein Deichsellängenschätzwert oder ein Knickwinkelschätzwert direkt als vorläufiger Deichsellängenwert bzw. vorläufiger absoluter Knickwinkelwert genutzt werden, insbesondere kann der vorläufige absolute Knickwinkelwert bzw. der vorläufige Deichsellängenwert jedoch wie zuvor beschrieben durch eine statistische Auswertung der bereits bestimmten Deichsellängenschätzwerte bzw. Knickwinkelschätzwerte berechnet werden. Vorläufige Deichsellängenwerte bzw. vorläufige absolute Knickwinkelwerte können insbesondere mehrmals bestimmt und bereitgestellt werden, im Speziellen nach jeder erfassten weiteren Lenkwinkelinformation.

Es ist möglich, dass die erste und/oder zweite Lenkwinkelinformation und/oder wenigstens eine der weiteren Lenkwinkelinformationen während einer Vorwärtsfahrt des Kraftfahrzeugs erfasst wird. Alternativ oder ergänzend ist es auch möglich, dass die erste und/oder die zweite Lenkwinkelinformation und/oder wenigstens eine der weiteren Lenkwinkelinformationen während einer Rückwärtsfahrt des Kraftfahrzeugs erfasst wird. Eine Erfassung einer der Lenkwinkelinformationen während einer gemischten Vorwärts-Rückwärtsfahrt des Kraftfahrzeugs, während der die Stabilitätsbedingung erfüllt ist, ist ebenfalls möglich. Dabei muss jedoch berücksichtigt werden, dass Standzeiten bzw. Zeiten, in denen das Kraftfahrzeug sehr langsam fährt, nicht berücksichtigt werden, da sonst eine Fehlerkennung einer Erfüllung der Stabilitätsbedingung möglich ist, weil sich der Knickwinkel zwischen Kraftfahrzeug und Anhänger bei stehendem Kraftfahrzeug offensichtlich nicht ändert.

Deichsellängenwerte können im Rahmen der Fahrerinformation und in Fahrerassistenzsystemen vielfältig genutzt werden. Dabei kann in Abhängigkeit des berechneten Deichsellängenwertes insbesondere ein maximaler Knickwinkelwert berechnet werden, bei dem eine Geradestellung des Anhängers bei Rückwärtsfahrt noch möglich ist, wobei die Steuerung des Fahreingriffs und/oder die Ausgabe der Information in Abhängigkeit des maximalen Knickwinkelwerts erfolgt. Insbesondere kann eine akustische, optische und/oder haptische Warnung ausgegeben werden, wenn sich ein momentaner absoluter Knickwinkelwert dem maximalen Knickwinkelwert nähert. Alternativ oder ergänzend wäre es beispielsweise möglich, dass bei Erreichen des maximalen Knickwinkelwertes durch den absoluten Knickwinkelwert ein Fahreingriff erfolgt, der eine Rückwärtsfahrt stoppt. Ergänzend oder alternativ kann der berechnete Deichsellängenwert auch genutzt werden, um einen sogenannten Komfortwinkel zu berechnen, bei dem bei einer Rückwärtsfahrt mit einem Anhänger ein Geradestellen des Anhängers möglich ist, ohne die Ausrichtung des Anhängers zu ändern.

Daneben betrifft die Erfindung ein Kraftfahrzeug, umfassend eine Anhängerkupplung zur Ankopplung eines Anhängers sowie eine Steuereinrichtung, wobei das Kraftfahrzeug eine Erfassungseinrichtung zur Erfassung von Knickwinkeländerungen zwischen dem Kraftfahrzeug und einem an der Anhängerkupplung angekoppelten Anhänger sowie eine Lenkwinkelerfassungseinrichtung zur Erfassung einer Lenkwinkelinformation umfasst, wobei die Steuereinrichtung zur Durchführung des erfindungsgemäßen Verfahrens ausgebildet ist. Dabei ist eine derartige Ausbildung des Kraftfahrzeugs insbesondere dann vorteilhaft, wenn die Erfassungseinrichtung einen absoluten Knickwinkel zwischen Kraftfahrzeug und Anhänger nicht direkt erfasst.

Dabei kann das Kraftfahrzeug eine Hinterradlenkeinrichtung zur Lenkung der Hinterräder aufweisen, wobei die Steuereinrichtung zur Ermittlung eines Lenkwinkels an einer Hinterradachse des Kraftfahrzeugs als Teil der Lenkwinkelinformation ausgebildet ist.

Weitere Vorteile und Einzelheiten der Erfindung ergeben sich aus den folgenden Ausführungsbeispielen sowie den zugehörigen Zeichnungen. Dabei zeigen:

Fig. 1    schematisch ein Ablaufdiagramm eines Ausführungsbeispiels eines erfindungsgemäßen Verfahrens,

Fig. 2 schematisch die Geometrie eines Kraftfahrzeugs mit Anhänger im Einspurmodell, und

Fig. 3 schematisch ein Ausführungsbeispiel eines erfindungsgemäßen Kraftfahrzeugs.

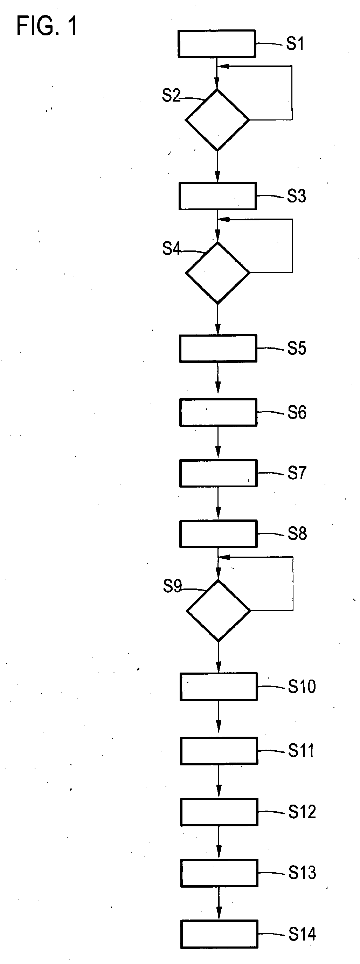

Fig. 1 zeigt schematisch ein Ablaufdiagramm eines Verfahrens zum Betrieb eines Fahrerassistenzsystems in einem Kraftfahrzeug, bei dem bei einer Fahrt mit einem Anhänger ein Deichsellängenwert des Anhängers und ein absoluter Knickwinkelwert zwischen dem Kraftfahrzeug und dem Anhänger bestimmt wird. Dabei umfasst das Kraftfahrzeug eine Erfassungseinrichtung zur Erfassung von Knickwinkeländerungen, die jedoch ausschließlich eine Änderung des Knickwinkels und keine absoluten Knickwinkel erfasst. Eine derartige Erfassungseinrichtung kann Knickwinkelgeschwindigkeiten des Anhängers, die eine zeitliche Änderung des Knickwinkels beschreiben, bereitstellen oder auch als Impulszähler ausgebildet sein, der bei einer bestimmten Änderung eines Knickwinkels in eine bestimmte Richtung jeweils einen entsprechenden Zählimpuls ausgibt.

In Schritt S1 des Verfahrens wird mit der Erfassung der Knickwinkeländerungen begonnen. Dabei kann die Erfassung der Knickwinkeländerungen derart erfolgen, dass Knickwinkeländerungen laufend protokolliert werden. Dies bedeutet, dass in regelmäßigen Zeitintervallen jeweils die Knickwinkelgeschwindigkeiten bzw. die Knickwinkeländerungen innerhalb des jeweiligen Zeitintervalls protokolliert werden. Damit liegt in einem Speicher eine Liste der Knickwinkeländerungen während aufeinander folgender Zeitintervalle vor. Dies ist vorteilhaft, da Knickwinkeländerungen zwischen zwei beliebigen zeitlich zurückliegenden Zeitpunkten in diesem Fall schlicht durch ein Aufsummieren der Knickwinkeländerungen ermittelt werden können.

Alternativ kann vorgesehen sein, nur einen integralen Wert für die Knickwinkeländerungen zu speichern, beispielsweise durch einen Zähler, der Zählimpulse zählt, oder ein Addieren einer Knickwinkeländerung während eines Zeitintervalls zu einem vorangehend gespeicherten Wert. In diesem Fall wird also eine Gesamtknickwinkeländerung gespeichert, wobei der Nullwert des Knickwinkels, relativ zu dem die Gesamtknickwinkeländerung gespeichert ist, nicht bekannt ist. Wird die Knickwinkeländerung derart gespeichert, ist zu beachten, dass im nachfolgend beschriebenen Verfahren zu Zeitpunkten, also insbesondere zu Erfassungszeitpunkten, zu denen weitere Daten erfasst werden, der momentane Wert dieser Gesamtknickwinkeländerung gespeichert werden muss, um eine Berechnung eines relativen Knickwinkels zwischen zwei Zeitpunkten zu ermöglichen.

In einer Mischform ist es auch möglich, zu vorgegebenen Zeitpunkten, insbesondere zu Zeitpunkten, zu denen weitere Daten erfasst werden, die momentane Gesamtknickwinkeländerung zu speichern und anschließend die Gesamtknickwinkeländerung auf Null oder auf einen vorgegebenen Wert zu setzen. Damit wird stets der relative Knickwinkel zwischen zwei dieser Zeitpunkte gespeichert, wodurch wiederum relative Knickwinkel zwischen beliebigen dieser Zeitpunkte bestimmt werden können.

In Schritt S2 wird überprüft, ob eine eine Knickwinkeländerung auswertende Stabilitätsbedingung erfüllt ist. Die Stabilitätsbedingung vergleicht die Summe bzw. das Integral der Knickwinkeländerungen über ein vorgegebenes Zeitintervall mit einem vorgegebenen Stabilitätsgrenzwert. Dabei liegt das vorgegebene Zeitintervall im Sekundenbereich, nämlich zwei Sekunden, und die Summe der Knickwinkeländerungen soll zur Erfüllung der Stabilitätsbedingung < 1° sein. Alternativ könnte der vorgegebene Stabilitätsgrenzwert oder die Länge des Zeitintervalls geschwindigkeitsabhängig vorgegeben sein. Die Stabilitätsbedingung kann ergänzend auswerten, ob sich das Kraftfahrzeug im Zeitintervall mit einer ausreichenden Geschwindigkeit bewegt, um eine Fehlerkennung eines stabilen Zustands bei Stillstand des Kraftfahrzeugs zu vermeiden.

Ist die Stabilitätsbedingung nicht erfüllt, so wird das Verfahren ab Schritt S2 wiederholt, das heißt, es wird genau so lange gewartet, bis die Stabilitätsbedingung erfüllt ist. Bei Erfüllung der Stabilitätsbedingung wird in Schritt S3 zu einem ersten Erfassungszeitpunkt durch eine Lenkwinkelerfassungseinrichtung eine Lenkwinkelinformation erfasst, die den Lenkwinkel des Kraftfahrzeugs beschreibt. Um im Folgenden relative Knickwinkel zwischen einem weiteren Zeitpunkt und dem ersten Erfassungszeitpunkt bestimmen zu können, wird, je nach Art der eingangs beschriebenen Erfassung der Knickwinkeländerungen, eine Gesamtknickwinkeländerung oder der Erfassungszeitpunkt selbst gespeichert.

Die folgenden Schritte S4 und S5 entsprechen im Wesentlichen den Schritten S2 und S3, wobei in Schritt S5 eine zweite Lenkwinkelinformation zu einem zweiten Erfassungszeitpunkt erfasst wird.

Nach Erfassung der ersten und zweiten Lenkwinkelinformationen wird in Schritt S6 ein relativer Knickwinkel zwischen dem ersten und dem zweiten Erfassungszeitpunkt berechnet. Dies kann im einfachsten Fall durch das Abziehen der jeweils gespeicherten Gesamtknickwinkeländerungen voneinander erfolgen, falls diese einen gemeinsamen Bezugspunkt haben. Alternativ kann zum ersten Erfassungszeitpunkt ein Zähler für das Gesamtlenkmoment zurückgesetzt worden sein, womit in Schritt S6 bereits direkt ein relativer Knickwinkel vorliegt. Zuletzt ist auch eine Summierung über während einer Vielzahl von Intervallen erfasste Knickwinkeländerungen im Zeitintervall zwischen dem ersten und dem zweiten Erfassungszeitpunkt möglich.

In einer nicht gezeigten Weiterbildung des Verfahrens wäre es möglich, dass bei einem Unterschreiten eines vorgegebenen Grenzwerts durch den relativen Knickwinkel das Verfahren ab Schritt S4 wiederholt wird. Dies kann vorteilhaft sein, da bei großen relativen Knickwinkeln zwischen dem ersten Erfassungszeitpunkt und dem zweiten Erfassungszeitpunkt eine genauere Berechnung des absoluten Knickwinkels bzw. des Deichsellängenwertes möglich ist. Daneben wird durch diese Bedingung eine Erfassung mehrerer Lenkwinkelinformationen bei identischem Knickwinkel verhindert.

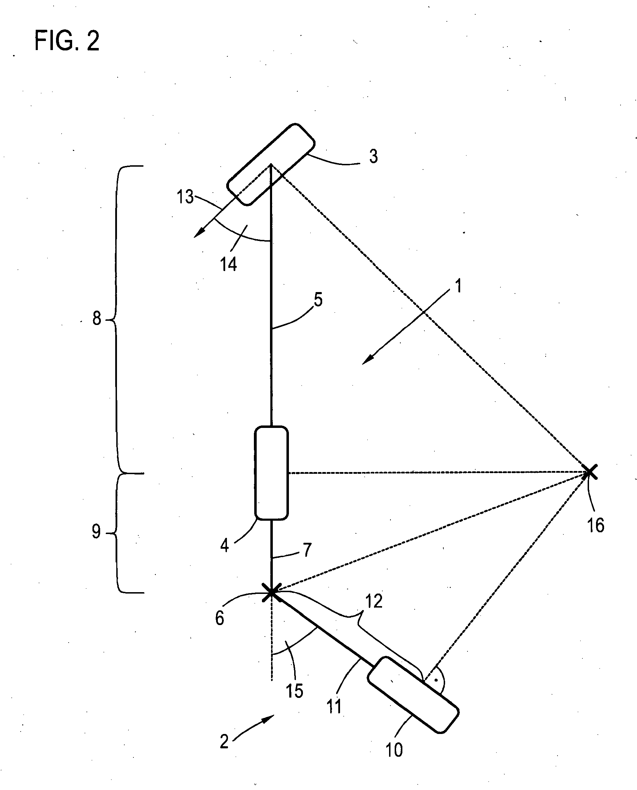

In Schritt S7 wird nach einer Erfassung einer ersten und zweiten Lenkwinkelinformation ein Deichsellängenwert für den Anhänger und ein absoluter Knickwinkelwert zum ersten Erfassungszeitpunkt berechnet. Hierzu wird die in Fig. 2 dargestellte Fahrzeug- und Anhängergeometrie ausgewertet. Fig. 2 zeigt ein Kraftfahrzeug 1, das über eine Anhängerkupplung 6 mit dem Anhänger 2 gekoppelt ist. Das Kraftfahrzeug 1 und der Anhänger 2 sind im Einspurmodell gezeigt, in dem jeweils nur eine Spur des Kraftfahrzeugs 1 und des Anhängers 2 berücksichtigt wird. In diesem Modell umfasst das Kraftfahrzeug ein Vorderrad 3, ein Hinterrad 4 sowie eine Anhängerkupplung 6. Das Vorderrad 3 und das Hinterrad 4 sind durch einen Abschnitt 5 der Fahrzeuglängsachse verbunden, der eine Länge 8 aufweist. Das Hinterrad 4 und die Anhängerkupplung 6 sind über einen Abschnitt 7 der Fahrzeuglängsachse verbunden, der eine Länge 9 aufweist.

Der Anhänger 2 ist mit einem einzelnen Anhängerrad 10 dargestellt, wobei das Anhängerrad 10 durch die Deichsel 11 mit der Deichsellänge 12 mit der Anhängerkupplung 6 verbunden ist. In der gezeigten Fahrsituation ist der Knickwinkel 15 zwischen der Deichsel 11 des Anhängers 2 und der Fahrzeuglängsachse derart eingestellt, dass sich bei einer Bewegung des Vorderrads 3 des Kraftfahrzeugs 1 in eine Richtung 13, also bei einem eingestellten Lenkwinkel 14, das Kraftfahrzeug 1 und der Anhänger 2 gemeinsam auf einer Kreisbahn um den gemeinsamen Momentanpol 16 bewegen. Damit wird eine geometrische Beziehung zwischen dem Lenkwinkel 14 und dem Knickwinkel 15 vorgegeben. Durch die bereits angegebene Formel kann in diesem Fall für den gezeigten stabilen Zustand ein fester Zusammenhang zwischen dem Lenkwinkel 14, dem Knickwinkel 15, der Fahrzeuggeometrie, die die Längen 8, 9 beschreibt, und der Deichsellänge 12 angegeben werden. Dabei sind wie erläutert zunächst sowohl die Deichsellänge 12 als auch der Knickwinkel 15 unbekannt. Durch Berücksichtigung zweier verschiedener stabiler Zustände und des relativen Knickwinkels zwischen diesen beiden Zuständen können jedoch zwei Gleichungen mit zwei Unbekannten bestimmt werden.

Durch Lösung des Gleichungssystems wird in Schritt S7 ein Deichsellängenschätzwert sowie ein Schätzwert für den absoluten Knickwinkel zum ersten Erfassungszeitpunkt bestimmt. Diese Werte werden in Schritt S8 als vorläufiger absoluter Knickwinkelwert und vorläufiger Deichsellängenwert bereitgestellt, um einen Fahrereingriff zu steuern und/oder eine Information auszugeben. Ergänzend wird ein momentaner absoluter Knickwinkelwert bereitgestellt, der durch Addition der Knickwinkeländerungen seit dem ersten Erfassungszeitpunkt zum vorläufigen absoluten Knickwinkelwert berechnet wird. Entsprechende Informationsausgaben und Fahreingriffe sind im Stand der Technik bekannt und sollen daher hier nicht näher erläutert werden.

Die anschließend ausgeführten Schritte S9 und S10 entsprechen wiederum den Schritten S2 und S3 bzw. S4 und S5, wobei in den Schritten S9 und S10 bei Erfüllung der Stabilitätsbedingung eine weitere Lenkwinkelinformation erfasst wird. In Schritt S10 wird, wie zu Schritt S6 beschrieben, ein relativer Knickwinkel zwischen dem weiteren Erfassungszeitpunkt und dem zweiten Erfassungszeitpunkt berechnet. Mit diesem weiteren relativen Knickwinkel wird in Schritt S11, wie zu Schritt S7 beschrieben, anschließend ein weiterer Deichsellängenschätzwert sowie ein weiterer absoluter Knickwinkelschätzwert berechnet, wobei der absolute Knickwinkelschätzwert zunächst für den zweiten Erfassungszeitpunkt berechnet wird.

In Schritt S12 wird der für den zweiten Erfassungszeitpunkt berechnete weitere Knickwinkelschätzwert auf einen weiteren Knickwinkelschätzwert für den ersten Erfassungszeitpunkt umgerechnet, indem vom weiteren Knickwinkelschätzwert für den zweiten Erfassungszeitpunkt der relative Knickwinkel zwischen dem ersten und dem zweiten Erfassungszeitpunkt abgezogen wird.

In Schritt S13 liegen damit zwei Knickwinkelschätzwerte für den ersten Erfassungszeitpunkt sowie zwei Deichsellängenschätzwerte vor. Aus diesen kann jeweils durch eine statistische Auswertung, nämlich Mittelwertbildung, ein absoluter Knickwinkelwert für den ersten Erfassungszeitpunkt und ein Deichsellängenwert berechnet werden. Diese Werte werden in Schritt S14 zur Steuerung eines Fahreingriffs und/oder zur Ausgabe einer Information bereitgestellt, wie in Schritt S8 bereits zur Bereitstellung des vorläufigen Deichsellängenwertes und des vorläufigen absoluten Knickwinkelwertes beschrieben.

In einer alternativen Ausführungsform des Verfahrens werden die Schritte S9 bis S14 wiederholt durchgeführt, wobei im Schritt S14 jeweils neue vorläufige absolute Knickwinkelwerte und vorläufige Deichsellängenwerte bereitgestellt werden, die Ermittlung der relativen Lenkwinkel in Schritt S11 jeweils zwischen zeitlich aufeinanderfolgenden Erfassungszeitpunkten erfolgt und die Umrechnung des Knickwinkelschätzwertes auf einen Knickwinkelschätzwert für den ersten Erfassungszeitpunkt entsprechend angepasst wird. Die Schritte S9 bis S14 können eine vorgegebene Anzahl von Malen wiederholt werden. Alternativ kann eine Abbruchbedingung vorgegeben werden, die insbesondere die Änderung des Knickwinkelschätzwertes bzw. des Deichsellängenschätzwertes zwischen zwei Durchläufen auswertet.

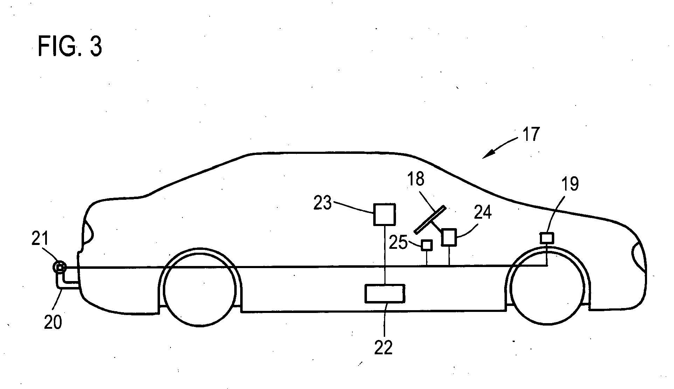

Fig. 3 zeigt ein Ausführungsbeispiel eines erfindungsgemäßen Kraftfahrzeugs. Das erfindungsgemäße Kraftfahrzeug 17 umfasst dabei ein Lenkrad 18 zur Lenkwinkelvorgabe durch einen Fahrer, eine Lenkwinkelerfassungseinrichtung 19, die den Lenkwinkel eines der Vorderräder des Kraftfahrzeugs 17 erfasst, eine Anhängerkupplung 20 mit einer zugeordneten Erfassungseinrichtung zur Erfassung von Knickwinkeländerungen, die als ein Impulsgeber ausgebildet ist, und eine Steuereinrichtung 22. Die Steuereinrichtung 22 ist dabei zur Durchführung des mit Bezug auf Fig. 1 erläuterten Verfahrens ausgebildet. Dabei steuert die Steuereinrichtung 22 die Anzeigeeinrichtung 23 nach Ermittlung eines vorläufigen absoluten Knickwinkelwertes bzw. eines absoluten Knickwinkelwertes zur graphischen Anzeige des momentanen Knickwinkelwertes an. Damit ist für den Fahrer der momentane Knickwinkel zwischen Kraftfahrzeug und Anhänger besonders leicht erfassbar. Ergänzend kann diese Steuereinrichtung den Aktor 24 ansteuern, um einen Sollknickwinkel einzustellen, der durch ein Bedienelement 25 vorgegeben ist. Die Ansteuerung erfolgt dabei in Abhängigkeit des mit Hilfe des zu Fig. 1 erläuterten Verfahrens ermittelten Deichsellängenwertes.

**Patentansprüche**

1. Verfahren zum Betrieb eines Fahrerassistenzsystems in einem Kraftfahrzeug (1, 17), wobei das Kraftfahrzeug (1, 17) eine Erfassungseinrichtung (21) zur Erfassung von Knickwinkeländerungen zwischen einem Anhänger (2) des Kraftfahrzeugs (1, 17) und dem Kraftfahrzeug (1, 17) aufweist, umfassend die Schritte:

   a) Beginn der Erfassung der Knickwinkeländerungen,
   b) Erfassen einer ersten Lenkwinkelinformation, die einen Lenkwinkel (14) des Kraftfahrzeugs (1, 17) beschreibt, durch eine Lenkwinkelerfassungseinrichtung (19) zu einem ersten Erfassungszeitpunkt, an dem eine eine Knickwinkeländerung auswertende Stabilitätsbedingung erfüllt ist, wobei bei Erfüllung der Stabilitätsbedingung ein stabiler Knickwinkel (15) zwischen dem Anhänger (2) und dem Kraftfahrzeug (1, 17) vorliegt, der sich zeitlich nicht oder nur unwesentlich ändert,
   c) Erfassen einer zweiten Lenkwinkelinformation zu einem zweiten Erfassungszeitpunkt, an dem die Stabilitätsbedingung erfüllt ist,
   d) Bestimmen eines relativen Knickwinkelwerts, der eine relative Änderung des Knickwinkels (15) zwischen dem ersten und dem zweiten Erfassungszeitpunkt beschreibt, als Summe der Knickwinkeländerungen zwischen dem ersten und dem zweiten Erfassungszeitpunkt,
   e) Berechnen eines Deichsellängenwerts für den Anhänger (2) und/oder eines absoluten Knickwinkelwerts zum ersten und/oder zweiten Erfassungszeitpunkt in Abhängigkeit von der ersten Lenkwinkelinformation, der zweiten Lenkwinkelinformation, dem relativen Knickwinkelwert und vorgegebenen Fahrzeuggeometriedaten, und
   f) Steuerung eines Fahreingriffs und/oder Ausgabe einer Information in Abhängigkeit des berechneten Deichsellängenwerts und/oder des berechneten absoluten Knickwinkelwerts.

2. Verfahren nach Anspruch 1,
   **dadurch gekennzeichnet,**
   **dass** zur Auswertung der Stabilitätsbedingung die Summe der Knickwinkeländerungen während eines vorgegebenen Zeitintervalls bestimmt und mit einem vorgegebenen Stabilitätsgrenzwert verglichen wird.

3. Verfahren nach Anspruch 1 oder 2,
   **dadurch gekennzeichnet,**
   **dass** als Lenkwinkelinformation wenigstens ein Lenkwinkel (14) an der Vorder- und/oder Hinterachse erfasst wird, oder dass als Lenkwinkelinformation eine Gierrate des Kraftfahrzeugs (1, 17) und eine Fahrzeuggeschwindigkeit ermittelt werden.

4. Verfahren einem der vorangehenden Ansprüche,
   **dadurch gekennzeichnet,**
   **dass** wenigstens eine weitere Lenkwinkelinformation zu einem weiteren Erfassungszeitpunkt, an dem die Stabilitätsbedingung erfüllt ist, erfasst wird, wonach wenigstens ein weiterer relativer Knickwinkelwert bezüglich eines anderen der Erfassungszeitpunkte bestimmt wird, wobei für mehrere Paare von Erfassungszeitpunkten jeweils ein Deichsellängenschätzwert und/oder ein Knickwinkelschätzwert berechnet wird, wonach aus den mehreren Deichsellängenschätzwerten bzw. Knickwinkelschätzwerten durch eine statistische Auswertung der Deichsellängenwert bzw. der absolute Knickwinkelwert zu wenigstens einem der Erfassungszeitpunkte bestimmt wird.

5. Verfahren nach Anspruch 4,
   **dadurch gekennzeichnet,**
   **dass** nach Erfassung wenigstens einer der weiteren Lenkwinkelinformationen ein vorläufiger Deichsellängenwert und/oder ein vorläufiger absoluter Knickwinkelwert bestimmt wird, wonach die Ausgabe der Information und/oder die Steuerung des Fahreingriffs zunächst in Abhängigkeit des vorläufigen Deichsellängenwerts bzw. des vorläufigen absoluten Knickwinkelwerts erfolgt.

**6.** Verfahren nach einem der vorangehenden Ansprüche,
**dadurch gekennzeichnet,**
**dass** die erste und/oder die zweite Lenkwinkelinformation und/oder wenigstens eine der weiteren Lenkwinkelinformationen während einer Vorwärtsfahrt des Kraftfahrzeugs (1, 17) erfasst wird.

**7.** Verfahren nach einem der vorangehenden Ansprüche,
**dadurch gekennzeichnet,**
**dass** die erste und/oder die zweite Lenkwinkelinformation und/oder wenigstens eine der weiteren Lenkwinkelinformationen während einer Rückwärtsfahrt des Kraftfahrzeugs (1, 17) erfasst wird.

**8.** Verfahren nach einem der vorangehenden Ansprüche,
**dadurch gekennzeichnet,**
**dass** in Abhängigkeit des berechneten Deichsellängenwertes ein maximaler Knickwinkelwert berechnet wird, bei dem eine Geradestellung des Anhängers bei Rückwärtsfahrt noch möglich ist, wobei die Steuerung des Fahreingriffs und/oder die Ausgabe der Information in Abhängigkeit des maximalen Knickwinkelwerts erfolgt.

**9.** Kraftfahrzeug, umfassend eine Anhängerkupplung (6, 20) zur Ankupplung eines Anhängers (2) sowie eine Steuereinrichtung (22),
**dadurch gekennzeichnet,**
**dass** das Kraftfahrzeug (1, 17) ein Erfassungseinrichtung (21) zur Erfassung von Knickwinkeländerungen zwischen dem Kraftfahrzeug und einem an der Anhängerkupplung angekuppelten Anhänger sowie eine Lenkwinkelerfassungseinrichtung (19) zur Erfassung einer Lenkwinkelinformation umfasst, wobei die Steuereinrichtung (22) zur Durchführung eines Verfahrens nach einem der vorangehenden Ansprüche ausgebildet ist.

**10.** Kraftfahrzeug nach Anspruch 11,
**dadurch gekennzeichnet,**
**dass** das Kraftfahrzeug (1, 17) eine Hinterradlenkeinrichtung zur Lenkung der Hinterräder (4) aufweist, wobei die Steuereinrichtung (22) zur Ermittlung eines Lenkwinkels (14) an einer Hinterachse des Kraftfahrzeugs (1, 17) als Teil der Lenkwinkelinformation ausgebildet ist.

**Claims**

**1.** Method for operating a driver assistance system in a motor vehicle (1, 17), wherein the motor vehicle (1, 17) has a detection device (21) for detecting changes in the articulation angle between a trailer (2) of the motor vehicle (1, 17) and the motor vehicle (1, 17), comprising the steps:

   a) beginning the detection of the articulation angle changes,
   b) detecting of a first steering angle information, which describes a steering angle (14) of the motor vehicle (1, 17), by a steering angle detection device (19) at a first detection time, at which a stability condition evaluating an articulation angle change is met, wherein when fulfilling the stability condition a stable articulation angle (15) is present between the trailer (2) and the motor vehicle (1, 17), which does not change or only changes insignificantly over time,
   c) detecting a second steering angle information at a second detection time, at which the stability condition is met,
   d) determining a relative articulation angle value, which describes a relative change of the articulation angle (15) between the first and second detection times, as the sum of the articulation angle changes between the first and second detection times,
   e) calculating a drawbar length value for the trailer (2) and/or an absolute articulation angle value at the first and/or second detection times depending on the first steering angle information, the second steering angle information, the relative articulation angle value and specified vehicle geometry data, and
   f) controlling a driving procedure and/or output of information depending on the calculated drawbar length value and/or the calculated absolute articulation angle value.

**2.** Method according to claim 1,
**characterised in that**,
in order to evaluate the stability condition, the sum of the articulation angle changes during a specified time interval is determined and compared with a specified stability limit value.

**3.** Method according to claim 1 or 2,
**characterised in that**
at least a steering angle (14) at the front and/or rear axle is detected as steering angle information, or **in that** a yaw rate of the motor vehicle (1, 17) and a vehicle velocity are determined as steering angle information.

**4.** Method according to any one of the preceding claims,
**characterised in that**
at least one further steering angle information is detected at a further detection time at which the stability condition is met, whereby at least one further relative articulation angle value is determined with respect to another of the detection times, wherein for each of several pairs of detection times, a drawbar length estimated value and/or an articulation angle estimated value is calculated, whereby the drawbar length value or the absolute articulation angle value at at least one of the detection times is determined, by means of a statistical evaluation, from the several drawbar length estimated values or articulation angle estimated values.

**5.** Method according to claim 4,
**characterised in that**
after detecting at least one of the further steering angle information, a provisional drawbar length value and/or a provisional absolute articulation angle value is determined, whereby the output of the information and/or the control of the driving procedure first follows depending on the provisional drawbar length value or the provisional absolute articulation angle value.

**6.** Method according to any one of the preceding claims,
**characterised in that**
the first and/or the second steering angle information and/or at least one of the further steering angle information are detected during a forward travel of the motor vehicle (1, 17).

**7.** Method according to any one of the preceding claims,
**characterised in that**
the first and/or the second steering angle information and/or at least one of the further steering angle information are detected during a reverse travel of the motor vehicle (1, 17).

**8.** Method according to any one of the preceding claims,
**characterised in that**
depending on the calculated drawbar length value, a maximum articulation angle value at which a straight position of the trailer is still possible during reverse travel is calculated, wherein the control of the driving procedure and/or the output of the information follows depending on the maximum articulation angle value.

**9.** Motor vehicle, comprising a trailer coupling (6, 20) for coupling a trailer (2) and a control device (22),
**characterised in that**
the motor vehicle (1, 17) comprises a detection device (21) for detecting articulation angle changes between the motor vehicle and a trailer coupled to the trailer coupling, and a steering angle detection device (19) for detecting steering angle information, wherein the control device (22) is designed to carry out a method according to any one of the preceding claims.

**10.** Motor vehicle according to claim 11,
**characterised in that**
the motor vehicle (1, 17) has a rear wheel steering device for steering the rear wheels (4), wherein the steering device (22) is designed for determining a steering angle (14) at the rear axle of the motor vehicle (1, 17) as part of the steering angle information.

**Revendications**

**1.** Procédé de fonctionnement d'un système d'assistance au conducteur dans un véhicule automobile (1, 17), dans lequel le véhicule automobile (1, 17) présente un dispositif de détection (21) pour la détection de modifications d'angle de pliage entre une remorque (2) du véhicule automobile (1, 17) et le véhicule automobile (1, 17), comprenant les étapes :

a) le début de la détection des modifications d'angle de pliage,

b) la détection d'une première information d'angle de braquage qui décrit un angle de braquage (14) du véhicule automobile (1, 17), par un dispositif de détection d'angle de braquage (19) à un premier moment de détection, auquel une condition de stabilité évaluant une modification d'angle de pliage est remplie, dans lequel en cas de remplissage de la condition de stabilité un angle de pliage (15) stable se présente entre la remorque (2) et le véhicule automobile (1, 17) qui ne se modifie pas temporellement ou seulement non essentiellement,

c) la détection d'une seconde information d'angle de braquage à un second moment de détection auquel la condition de stabilité est remplie,

d) la détermination d'une valeur d'angle de pliage relative qui décrit une modification relative de l'angle de pliage (15) entre le premier et le second moment de détection, en tant que somme des modifications d'angle de pliage entre le premier et le second moment de détection,

e) le calcul d'une valeur de longueur de timon pour la remorque (2) et/ou d'une valeur d'angle de pliage absolue au premier et/ou second moment de détection en fonction de la première information d'angle de braquage, la seconde information d'angle de braquage, la valeur d'angle de pliage relative et des données de géométrie de véhicule prédéfinies, et

f) la commande d'une intervention du conducteur et/ou la sortie d'une information en fonction de la valeur de longueur du timon calculée et/ou de la valeur d'angle de pliage absolue calculée.

2. Procédé selon la revendication 1,
   **caractérisé en ce**
   **que** pour l'évaluation de la condition de stabilité la somme des modifications d'angle de pliage est déterminée pendant un intervalle de temps prédéfini et est comparée avec une valeur limite de stabilité prédéfinie.

3. Procédé selon la revendication 1 ou 2,
   **caractérisé en ce**
   **qu'**en tant qu'information d'angle de braquage au moins un angle de braquage (14) est détecté sur l'essieu avant/ou arrière, ou qu'en tant qu'information d'angle de braquage une vitesse de lacet du véhicule automobile (1, 17) et une vitesse du véhicule sont déterminées.

4. Procédé selon l'une quelconque des revendications précédentes,
   **caractérisé en ce**
   **qu'**au moins une autre information d'angle de braquage est détectée à un autre moment de détection auquel la condition de stabilité est remplie, après quoi au moins une autre valeur d'angle de pliage relative est déterminée par rapport à un autre des moments de détection, dans lequel pour plusieurs paires de moments de détection respectivement une valeur d'estimation de longueur de timon et/ou une valeur d'estimation d'angle de pliage est calculée, après quoi la valeur de longueur de timon ou la valeur d'angle de pliage absolue est déterminée à au moins un des moments de détection à partir de plusieurs valeurs d'estimation de longueur de timon ou valeurs d'estimation d'angle de pliage par une évaluation statistique.

5. Procédé selon la revendication 4,
   **caractérisé en ce**
   **qu'**après la détection d'au moins une des autres informations d'angle de braquage une valeur de longueur de timon provisoire et/ou une valeur d'angle de pliage absolue provisoire est déterminée, après quoi la sortie de l'information et/ou la commande de l'intervention du conducteur est tout d'abord effectuée en fonction de la valeur de longueur de timon provisoire ou de la valeur d'angle de pliage absolue provisoire.

6. Procédé selon l'une quelconque des revendications précédentes,
   **caractérisé en ce**
   **que** la première et/ou la seconde information d'angle de braquage et/ou au moins une des autres informations d'angle de braquage est détectée pendant un déplacement vers l'avant du véhicule automobile (1, 17).

7. Procédé selon l'une quelconque des revendications précédentes,
   **caractérisé en ce**
   **que** la première et/ou la seconde information d'angle de braquage et/ou au moins une des autres informations d'angle de braquage est détectée pendant un déplacement vers l'arrière du véhicule automobile (1, 17).

8. Procédé selon l'une quelconque des revendications précédentes,
   **caractérisé en ce**

qu'en fonction de la valeur de longueur de timon calculée une valeur d'angle de pliage maximale est calculée, pour laquelle une position droite de la remorque est encore possible en cas de déplacement vers l'arrière, dans lequel la commande de l'intervention du conducteur et/ou la sortie de l'information est effectuée en fonction de la valeur d'angle de pliage maximale.

9. Véhicule automobile, comprenant un attelage de remorque (6, 20) pour l'attelage d'une remorque (2) ainsi qu'un dispositif de commande (22),
**caractérisé en ce**
**que** le véhicule automobile (1, 17) comprend un dispositif de détection (21) pour la détection de modifications d'angle de pliage entre le véhicule automobile et une remorque attelée à l'attelage de remorque ainsi qu'un dispositif de détection d'angle de braquage (19) pour la détection d'une information d'angle de braquage, dans lequel le dispositif de commande (22) est réalisé pour la réalisation d'un procédé selon l'une quelconque des revendications précédentes.

10. Véhicule automobile selon la revendication 11,
**caractérisé en ce**
**que** le véhicule automobile (1, 17) présente un dispositif de direction de roue arrière pour la direction des roues arrière (4), dans lequel le dispositif de commande (22) est réalisé pour la détermination d'un angle de braquage (14) sur un essieu arrière du véhicule automobile (1, 17) en tant que partie de l'information d'angle de braquage.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008013457 A1
- DE 102010050474